# EUROPÄISCHE PATENTSCHRIFT

(11) **EP 0 775 808 B1**
(45) Veröffentlichungstag und Bekanntmachung des Hinweises auf die Patenterteilung: **16.08.2001**
(21) Anmeldenummer: 96810775.5
(22) Anmeldetag: 12.11.1996
(51) Int. Cl.: F01N 3/28

(54) **Verfahren zur Herstellung eines Katalysatorkörpers für die katalytische Behandlung von Gas, Katalysatorkörper und Katalysator**
Process for manufacturing the body of a catalyst for the catalytic treatment of gases, catalytic body and catalyst
Procédé pour la fabrication du corps d'un catalyseur pour le traitement catalytique de gaz, corps de catalyseur et catalyseur

(30) Priorität: 23.11.1995 CH 331195
(43) Veröffentlichungstag der Anmeldung: 28.05.1997
(73) Patentinhaber: SCAMBIA INDUSTRIAL DEVELOPMENTS AKTIENGESELLSCHAFT, 9494 Schaan (LI)
(72) Erfinder: Steenackers, Pieter D., Dr., 3030 Heverlee (BE); Wollants, Freddy F. P., 3201 Aarschot (BE); Hoefnagels, Adrianus J.F., 5721 LJ Asten (NL)
(74) Vertreter: Eder, Carl E.

(56) Entgegenhaltungen:
- EP-A- 0 676 534
- US-A- 4 948 774
- US-A- 5 187 142
- PATENT ABSTRACTS OF JAPAN vol. 18, no. 651 (C-1285), 9.Dezember 1994 & JP 06 254409 A (NIPPON STEEL)
- PATENT ABSTRACTS OF JAPAN vol. 5, no. 160 (C-075), 15.Oktober 1981 & JP 56 089836 A (MITSUBISHI)
- PATENT ABSTRACTS OF JAPAN vol. 95, no. 005 & JP 07 116758 A (SHOWA AIRCRAFT IND CO LTD), 9.Mai 1995,
- PATENT ABSTRACTS OF JAPAN vol. 012, no. 075 (C-480), 9.März 1988 & JP 62 213844 A (USUI INTERNATL IND CO LTD), 19.September 1987,

## Beschreibung

Die Erfindung betrifft ein Verfahren zur Herstellung eines Katalysatorkörpers für die katalytische Behandlung von Gas, insbesondere für die katalytische Reinigung von Abgas eines Verbrennungsmotors. Solche zum Einbau in ein Gehäuse eines Katalysators vorgesehene Katalysatorkörper werden häufig auch als Substrat bezeichnet. Der Verbrennungsmotor kann zum Beispiel zu einem Automobil oder sonstigen Motorfahrzeug gehören oder stationär angeordnet sein.

Ein aus der US-A 5 187 142 bekannter Katalysator besitzt einen Katalysatorkörper mit aufeinander gestapelten, viereckförmigen Wellblechelementen, von denen jedes in einem Fischgrätenmuster angeordnete Wellen hat. Zwischen aufeinanderfolgenden Gruppen solcher Wellblechelemente sind Halteblechelemente angeordnet, von denen jedes einen viereckförmigen, gewellten Hauptabschnitt und bei zwei einander abgewandten Rändern von diesem einen abgewinkelten Lappen besitzt. Bei der Herstellung eines derartigen Katalysatorkörpers werden zuerst blanke Wellblechelemente und Halteblechelemente hergestellt und aufeinander gestapelt. Dann werden die Blechelemente bei ihren Berührungspunkten durch Hartlöten oder Entladungsschweissen miteinander verbunden und die einander überlappenden Lappen miteinander und möglicherweise auch mit den Wellblechelementen verschweisst, so dass ein Paket von fest miteinander verbundenen Blechelementen entsteht, wobei die Lappen zusammen Innen- und Aussenflächen mit Stufen bilden. Danach werden Überzüge mit katalytisch aktivem Material auf die miteinander verbundenen Blechelemente aufgebracht. Die Blechelemente begrenzen dann zusammen Durchgänge für das Abgas.

Bei diesem Herstellungsverfahren erfordert das Herstellen und Zusammenbauen der Blechelemente relativ viele Arbeitsschritte. Ferner ist es schwierig und aufwendig, nach dem Zusammenbauen eines Pakets von Blechelementen einigermassen gleichmässige Überzüge auf die ganzen Flächen der Wellblechelemente und der Hauptabschnitte der Halteblechelemente aufzubringen. Damit die genannten Flächen wenigstens einigermassen vollständig von Überzügen bedeckt werden, müssen die Wellen relativ hoch gemacht werden. Zudem müssen die Wellen benachbarter Blechelemente einander kreuzen, so dass jedes Paar von einander benachbarten Blechelementen nur einen einzigen Durchgang begrenzt, der nur bei den Berührungspunkten der Blechelemente unterteilt ist. Der Katalysatorkörper hat daher in einem quer zur allgemeinen Strömungsrichtung des Abgases verlaufenden Querschnitt nur eine geringe Anzahl Durchgänge pro Querschnittsflächeneinheit, wobei die einander gegenüberstehenden Abschnitte der Oberflächen eines Durchgangs im allgemeinen grosse Abstände voneinander haben. Der Katalysatorkörper ergibt aus diesen Gründen nur eine geringe Reinigungswirkung pro Volumeneinheit des Katalysatorkörpers und muss daher zur Ermöglichung einer ausreichenden Abgasreinigung relativ gross ausgebildet werden. Der bekannte Katalysatorkörper und ein mit einem solchen ausgerüsteter Katalysator haben daher die Nachteile, dass sie viel Platz benötigen und entsprechend schwer sind. Die grosse Masse des bekannten Katalysatorkörpers vergrössert zudem bei einem Kaltstart die Zeit zum Aufheizen des Katalysatorkörpers auf eine für eine wirksame Abgasreinigung günstige Temperatur. Zudem enthalten die Katalysatorkörper teure Materialien, insbesondere normalerweise mindestens ein in den Überzügen vorhandenes Edelmetall, so dass die grosse Masse eines bekannten Katalysatorkörpers auch die Herstellungskosten des Katalysators erhöht.

Bei einem aus der JP-A 6 254 409 bekannten Verfahren zur Herstellung eines Katalysatorkörpers werden ebene und gewellte Blechelemente in zwei Hülsen eingesetzt und in diesen befestigt. Dann werden die beiden Hülsen miteinander verschweisst. Danach werden Überzüge mit einem katalytisch aktiven Material auf die Blechelemente aufgebracht. Die Wellen der gewellten Blechelemente eines derart hergestellten Katalysatorkörpers müssen ebenfalls grosse Wellenhöhen haben, damit man nach dem Zusammenbauen der Blechelemente noch Überzüge auf diese aufbringen kann. Das aus der JP-A 6 254 409 bekannte Herstellungsverfahren und der mit diesem hergestellte Katalysatorkörper haben daher weitgehend ähnliche Nachteile wie das Herstellungsverfahren und der Katalysatorkörper gemäss der US-A 5 187 142.

Aus den Publikationen EP-A 0 676 534 und EP-A 0 676 535 sind Katalysatorkörper bekannt, von denen jeder viereckförmige, ebene und gewellte Blechelemente und bei zwei einander abgewandten Rändern der Blechelemente angeordnete Distanzelemente besitzt. Für die Herstellung eines derartigen Katalysatorkörpers stellt man gemäss der EP-A 0 676 534 Blechelemente her, die einen gewellten, mit Überzügen versehenen Hauptabschnitt und ebene, blanke Randabschnitte haben, an denen Distanzelemente durch Punktschweissen provisorisch befestigt sind. Ferner werden ebene Blechelemente mit einem Überzüge aufweisenden Hauptabschnitt und blanken Randabschnitten hergestellt. Danach werden die Blechelemente aufeinandergestapelt und entlang ihrer genannten Ränder mit den Distanzelementen und miteinander verschweisst. Dieses Herstellungsverfahren ist jedoch ziemlich aufwendig.

Bei hergestellten Katalysatoren dieser Art betragen die Längen der Katalysatorkörper und Blechelemente mindestens 100 mm und die Breiten der Distanzelemente ungefähr 5 mm. Die Distanzelemente und die von diesen bedeckten, blanken Randabschnitte der Blechelemente haben eine relativ grosse Masse, die bei einem Kaltstart die Zeit zum Aufheizen der Katalysatorkörper auf die optimale Betriebstemperatur verzögert. Dauerversuche mit Katalysatoren der beschriebenen Art haben zudem gezeigt, dass bei starken Beanspruchungen, insbesondere bei relativ langen Katalysatorkörpern, bleibende Verformungen von Blechelementen entstehen können, welche die Wirkung der Katalysatorkörper beeinträchtigen.

Der Erfindung liegt die Aufgabe zugrunde, ein Verfahren zur Herstellung eines Katalysatorkörpers zu schaffen, das ermöglicht, Nachteile der bekannten Herstellungsverfahren und der damit hergestellten Katalysatorkörper zu vermeiden. Es soll insbesondere ausgehend von dem aus der EP-A 0 676 534 bekannten Verfahren ermöglicht werden, die durch die Distanzelemente bedingte Komplikation des Herstellungsverfahrens sowie Vergrösserung der Katalysatorkörper-Masse und den ebenfalls durch die Distanzelemente verursachten Platzverlust möglichst zu vermeiden. Dabei soll es möglich sein, auch bei kleinen, vorgesehenen Querschnittsabmessungen der Durchgänge in einfacher Weise einigermassen gleichmässige Überzüge auf die ganzen an die Durchgänge angrenzenden Flächen der Blechelemente aufzubringen. Ferner soll der Katalysatorkörper wirtschaftlich herstellbar und dauerhaft sein.

Diese Aufgabe wird gemäss der Erfindung durch ein Verfahren zur Herstellung eines Katalysatorkörpers mit den Merkmalen des Anspruchs 1 gelöst.

Die Erfindung betrifft ferner einen Katalysatorkörper mit den Merkmalen des Anspruchs 18 und einen Katalysator mit den Merkmalen des Anspruchs 20.

Gemäss der Erfindung werden zuerst Blechelemente mit Überzügen hergestellt. Danach werden die bereits Überzüge aufweisenden Blechelemente zur Bildung eines Pakets derart aufeinander gestapelt und zwischen zwei Wänden angeordnet, dass die Blechelemente zusammen Durchgänge für das Gas begrenzen. Diese Reihenfolge der Verfahrensschritte ermöglicht, auch bei kleinen vorgesehenen Querschnittsabmessungen der Durchgänge in einfacher und wirtschaftlicher Weise Überzüge auf die ganzen Flächen aufzubringen, die nachher beim fertigen Katalysatorkörper an die Durchgänge angrenzen.

Die Überzüge weisen katalytisch aktives Material, nämlich vorzugsweise mindestens ein Edelmetall, beispielsweise Platin und Rhodium auf. Die Überzüge enthalten zudem vorzugsweise ein poröses, zur Bildung einer rauhen, grossen Oberfläche dienendes, nicht-metallisches Material, das mindestens ein Oxid, beispielsweise Aluminiumoxid aufweist und den sogenannten "wash coat" bildet. Dieses nicht-metallische Material kann dann volumen- und gewichtsmässig den grössten Teil des Überzugs bilden. Das erfindungsgemässe Verfahren ermöglicht, die Überzüge derart gleichmässig auf die Flächen der Blechelemente aufzubringen, dass sie bei den ganzen Flächen ungefähr gleiche Dicken, Strukturen und Zusammensetzungen haben. Zur Bildung eines Überzugs kann man zum Beispiel gleichzeitig mindestens ein nicht-metallisches Material und mindestens ein katalytisch aktives Edelmetall auf einen zur Bildung von Blechelementen dienenden, metallischen Träger aufbringen, beispielsweise zusammen mit einem flüssigen Dispersions- und/oder Lösungsmittel aufsprühen. Es besteht auch die Möglichkeit, nacheinander Überzugsmaterialien mit verschiedenen Zusammensetzungen auf einen Träger aufzubringen.

Es wurde überraschend gefunden, dass man auch Blechelemente, deren zwei einander abgewandten Flächen vollständig und bis zu den mit den Wänden zu verbindenden Rändern mit zum grössten Teil aus nicht-metallischem Material bestehenden Überzügen versehen bzw. gebildet sind, durch Schmelzen von metallischem Material, nämlich durch Schweissen, fest und dauerhaft mit den Wänden verbinden kann.

Der Erfindungsgegenstand wird anschliessend anhand von in der Zeichnung dargestellten Ausführungsbeispielen näher erläutert. In der Zeichnung zeigt
die Fig. 1 einen Längsschnitt durch einen Katalysator mit zwei V-förmig angeordneten Katalysatorkörpern, von denen jeder drei Blöcke mit einem Paket von Blechelementen aufweist,
die Fig. 2 einen Querschnitt durch den Katalysator entlang der Linie II - II der Fig. 1,
die Fig. 3 eine Schrägansicht von einem Katalysatorkörper,
die Fig. 4 eine Schrägansicht von einem Teil von einem der Blöcke eines Katalysatorkörpers in grösserem Massstab als die Fig. 3,
die Fig. 5 einen Längsschnitt durch einen ebenen, bandförmigen, metallischen Träger beim Aufsprühen von Überzugsmaterial,
die Fig. 6 einen Längsschnitt durch einen gewellten, bandförmigen, metallischen Träger beim Aufsprühen von Überzugsmaterial,
die Fig. 7 eine Schneidvorrichtung zum Zerschneiden eines bandförmigen, mit Überzügen versehenen Trägers,
die Fig. 8 einen zu den Durchgängen eines Katalysatorkörpers rechtwinkligen Querschnitt durch Bereiche einer Wand und einiger Blechelemente beim Verschweissen der Wand mit den Blechelementen, in wesentlich grösserem Massstab als die Figuren 1 und 2,
die Fig. 9 einen zur Fig. 1 analogen Längsschnitt durch einen Katalysator mit zwei Katalysatorkörpern, von denen jeder vier Blöcke mit einem Paket von Blechelementen aufweist und
die Fig. 10 eine Schrägansicht eines Katalysatorkörpers mit zwei Reihen von miteinander verbundenen Blöcken, von denen jeder ein Paket von Blechelementen aufweist.

Es sei noch darauf hingewiesen, dass verschiedene Figuren schematisch und zum Teil nicht massstäblich gezeichnet sind.

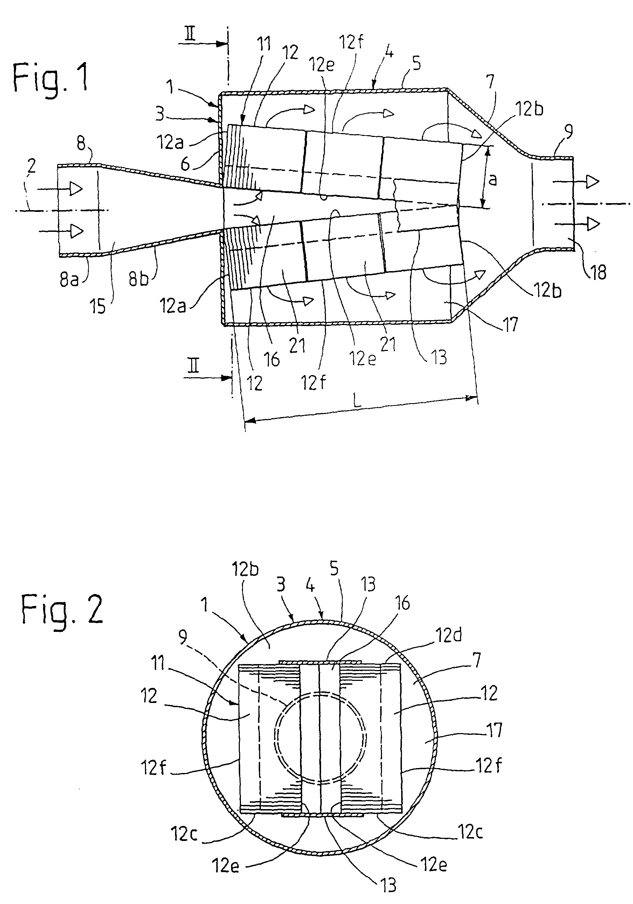

Der in den Figuren 1 und 2 ersichtliche Katalysator 1 dient für die katalytische Behandlung von Gas, nämlich für die katalytische Behandlung von Abgas eines Benzin-Verbrennungsmotors. Der Katalysator 1 definiert eine Achse 2 und besitzt ein Gehäuse 3. Dessen Wandung 4 besitzt mehrere Wandungsteile, nämlich einen zur Achse 2 koaxialen, parallelen, beispielsweise zylindrischen, im Querschnitt kreisförmigen Mantel 5, eine ebene Endwand 6 und eine sich vom Mantel 5 weg konisch verjüngende Endwand 7.

Das Gehäuse 3 ist mit einem Einlass 8 und einem Auslass 9 versehen. Der Einlass 8 besitzt einen zur Achse 2 koaxialen zylindrischen, im Querschnitt kreisförmigen Abschnitt 8a, der durch einen Übergangsabschnitt 8b mit der Endwand 6 verbunden ist. Der Auslass 9 ist koaxial zur Achse 2, im wesentlichen zylindrisch und mit der Endwand 7 verbunden. Die verschiedenen Wandungsteile, der Einlass 8 und der Auslass 9 bestehen aus einem metallischen Material, beispielsweise rostfreiem Stahl, und sind starr und dicht miteinander verbunden, beispielsweise verschweisst, könnten jedoch stattdessen mindestens teilweise durch Bördelverbindungen verbunden sein.

Der dicht gegen die Umgebung abgeschlossene Innenraum des Gehäuses 3 enthält Katalysatormittel mit zwei länglichen Katalysatorkörpern 12. Diese sind im in der Fig. 1 gezeichneten, durch die Achse 2 verlaufenden Längsschnitt V-förmig angeordnet. Jeder Katalysatorkörper 12 hat im wesentlichen die Form eines Parallelepipeds nämlich eines Quaders. Jeder Katalysatorkörper 12 hat dementsprechend sechs Flächen, die einander paarweise abgewandt und paarweise zueinander parallel sind, nämlich eine erste Fläche bzw. Endfläche 12a, eine dieser abgewandte, zweite Fläche bzw. Endfläche 12b, eine dritte Fläche bzw. Grundfläche 12c, eine dieser abgewandte, vierte Fläche bzw. Deckfläche 12d, eine fünfte Fläche bzw. innere Mündungsfläche 12e und eine dieser abgewandte, sechste Fläche bzw. äussere Mündungsfläche 12f.

Die beiden Katalysatorkörper 12 sind bei den Kanten zwischen den Endflächen 12a und den inneren Mündungsflächen 12e fest und dicht mit der Endwand 6 verbunden, nämlich verschweisst. Die beiden Katalysatorkörper stossen bei der zwischen den Endflächen 12b und den inneren Mündungsflächen 12e vorhandenen Kanten aneinander an und sind dort fest und dicht miteinander verbunden, nämlich verschweisst. Ferner sind zwei Platten 13 vorhanden, von denen eine an den Grundflächen 12c und die andern an den Deckflächen 12d der beiden Katalysatorkörper 12 anliegt. Die beiden Platten 13 bestehen aus Stahl und sind über die ganze Länge der Katalysatorkörper 12 fest und dicht mit diesen verbunden, nämlich verschweisst. Ferner sind die beiden Platten 13 mindestens beim mittleren Bereich von ihren dem Einlass 8 zugewandten Rändern fest und dicht mit der Endwand 6 verbunden, nämlich verschweisst.

Der Einlass 8 umschließt im Querschnitt einen Einlass-Durchgang 15. Dieser mündet bei der Endwand 6 in einen im Querschnitt von den beiden Katalysatorkörpern 12 und den beiden Platten 13 umschlossenen, inneren Hohlraum 16. Dieser ist bei seinem mit dem Einlass verbundenen Ende im Querschnitt viereckförmig, nämlich rechteckförmig. Der Mantel des Übergangsabschnitts 8b ist mindestens bei gewissen Umfangsbereichen gegen die Achse 2 geneigt, so dass der von ihm begrenzte Abschnitt des Einlass-Durchgangs 15 bei dessen mit dem inneren Hohlraum 16 verbundenem Ende ungefähr die gleiche Querschnittsabmessung wie der innere Hohlraum 16 hat. Die Breite und die Querschnittsfläche des inneren Hohlraums 16 nehmen im vom Einlass 8 weg verlaufender Richtung linear bis mindestens annähernd auf den Wert Null ab, so dass sich der innere Hohlraum 16 an seinem dem Einlass abgewandten Ende mindestens annähernd zu einer geraden Linie verengt. Ein äusserer Hohlraum 17 befindet sich zwischen Innenflächen von Wandungsteilen des Gehäuses 3 und den Katalysatorkörpern 12 sowie den Platten 13 und ist mit einem im Querschnitt vom Auslass 9 umschlossenen Auslass-Durchgang 18 verbunden. Jeder Katalysatorkörper 12 grenzt mit seiner inneren Mündungsfläche 12e an den inneren Hohlraum 16 und mit seiner äusseren Mündungsfläche 12f an den äusseren Hohlraum 17 an.

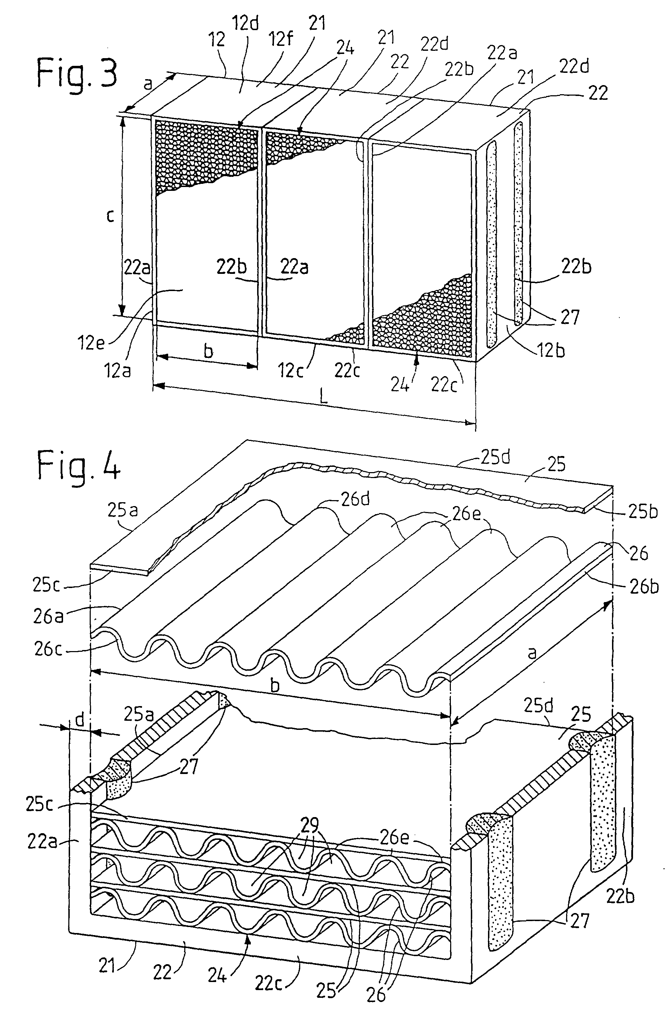

Nun soll einer der Katalysatorkörper 12 anhand der Figuren 3, 4 und 8 näher beschrieben werden. Jeder Katalysatorkörper 12 ist aus mindestens zwei und nämlich drei im wesentlichen identisch ausgebildeten und bemessenen, starr miteinander verbunden Blöcken 21 zusammengesetzt. Jeder Block 21 hat im allgemeinen die Form eines Parallelepipeds, nämlich eines Quaders, so dass die aneinander anstossenden Flächen jedes Blocks 21 paarweise rechtwinklig zueinander sind. Jeder Block besitzt eine an beiden Enden offene, im Querschnitt, im wesentlichen viereckförmige, nämlich rechteckförmige Hülse 22 und ein in dieser angeordnetes Paket 24 von kompakten, d.h. lochfreien, abwechselnd aufeinander folgenden, separaten, ersten Blechelementen 25 und zweiten Blechelementen 26. Jede Hülse hat eine erste Wand 22a, eine zweite Wand 22b, eine dritte Wand 22c und eine vierte Wand 22d. Die vier Wände 22a-22d sind im wesentlichen eben, können aber eventuell durch mit kleinen Krümmungsradien gebogene Übergangsabschnitte miteinander verbunden sein. Die Aussen- und Innenflächen der Wände sind mindestens vor dem Verbinden mit den Blechelementen im wesentlichen eben und glatt, d.h. frei von Rillen oder Rippen oder sonstigen Vertiefungen und Erhöhungen. Die erste Wand 22a und die zweite Wand 22b sind einander abgewandt und parallel zueinander sowie zu den Endflächen 12a, 12b des Katalysatorkörpers 12. Die dritte Wand 22c und die vierte Wand 22d sind einander abgewandt und parallel zueinander und zur Grundfläche 12c sowie zur Deckfläche 12d des Katalysatorkörpers 12. Die einander benachbarten Hülsen 22 liegen mit den ebenen Aussenflächen einer ersten Wand 22a bzw. einer zweiten Wand 22b aneinander an und sind bei den Stossstellen starr miteinander verbunden. Die drei Hülsen sind zum Beispiel entlang den in der Fig. 3 vertikalen Rändern der aneinander anliegenden Wände miteinander verschweisst.

Jedes Blechelement 25, 26 hat vier Ecken, einen ersten Rand 25a bzw. 26a, einen zweiten Rand 25b bzw. 26b, einen dritten Rand 25c bzw. 26c und einen vierten Rand 25d bzw. 26d. Die vier Ränder jedes Blechelements sind mindestens in einer Draufsicht auf dieses vollständig gerade. Die Blechelemente 25, 26 haben daher in der Draufsicht die Form eines rechtwinkligen Parallelogramms, nämlich eines Rechtecks. Die ersten Blechelemente 25 sind vollständig eben. Die zweiten Blechelemente 26 sind überall mit Wellen 26e versehen. Diese sind gerade und zueinander sowie zu den ersten und zweiten Rändern 26a, 26b parallel. Jedes zweite Blechelement 26 definiert zwei ebene Schmiegeflächen, die sich auf der unteren bzw. oberen Seite des Blechelements bei den Wellenscheiteln der Wellen 26e an das Blechelement anschmiegen. Die Blechelemente 25, 26 sind derart in der zugeordneten Hülse 22 angeordnet, dass die ersten, ebenen Blechelemente 25 und die von den zweiten Blechelementen definierten, ebenen Schmiegeflächen parallel zur Grundfläche 12c sowie zur Deckfläche 12d des Katalysatorkörpers 12 und zu den Wänden 22c, 22d der Hülse 22 sind. Die ersten und zweiten Ränder 25a, 25b, 26a, 26b der Blechelemente sind einander abgewandt und über ihre ganzen Längen den Innenflächen der zu diesen Rändern parallelen Wänden 22a, 22b zugewandt. Die Blechelemente passen satt zwischen die ersten und zweiten Wände hinein oder haben zwischen diesen ein kleines, beispielsweise höchstens 0,5 mm betragendes Spiel, so dass die ersten und zweiten Ränder aller Blechelemente mindestens annähernd an die Innenflächen der ersten bzw. zweiten Wände anstossen. Jedes Blechelement 25, 26 ist bei mindestens einem Randabschnitt und nämlich bei zwei oder eventuell noch mehr voneinander in Abstand stehenden Randabschnitten seines ersten Randes 25a bzw. 26a mit der ersten Wand 22a in noch näher beschriebener Weise fest verbunden, nämlich verschweisst. Jedes Blechelement 25, 26 ist ferner bei mindestens einem Randabschnitt und nämlich bei zwei oder eventuell noch mehr voneinander in Abstand stehenden Randabschnitten seines zweiten Randes 25b bzw. 26b mit der zweiten Wand 22b fest verbunden, nämlich verschweisst. Die die Wände 22a, 22b mit den Blechelementen verbindenden Schweissverbindungen liegen auf zwei streifenförmigen Bereichen der Wände 22a, 22b und sind in den Figuren 3, 4 und 8 schematisch durch Punktierungen dargestellt und mit 27 bezeichnet. Die streifenförmigen Bereiche verlaufen rechtwinklig zu den Wänden 22c und 22d. Jedes sich nicht am Ende eines Pakets 24 befindende, zweite Blechelement 26 liegt bei den Wellenscheiteln seiner Wellen 26e an den beiden ihm benachbarten, ebenen, ersten Blechelementen 25 an. An den beiden Enden des Pakets 24 können beispielsweise zweite Blechelemente 26 vorhanden sein, die mit Wellenscheiteln an den Wänden 22c bzw. 22d anliegen. Die Blechelemente begrenzen paarweise zusammen voneinander getrennte Durchgänge 29, die parallel zu den ersten sowie zweiten Rändern 25a, 26a, 25b, 26b von den dritten Rändern 25c, 26c zu den vierten Rändern der Blechelemente 25 bzw. 26 verlaufen. Die Blechelemente 25, 26 eines Pakets 24 bilden zusammen eine Matrix, welche die betreffende Hülse 22 - abgesehen von den Durchgängen 29 - im wesentlichen vollständig ausfüllt. Die dritten Ränder 25c, 26c der Blechelemente sind bündig mit den auf der betreffenden Seite der Hülse 22 vorhandenen Rändern der Hülsen-Wände. Entsprechendes gilt für die vierten Ränder 25d, 26d der Blechelemente und die bei diesen Rändern vorhandenen Ränder der Hülse 22.

Die Aussenfläche der ersten Wand 22a der sich in der Fig. 3 am linken Ende des Katalysatorkörpers 12 befindenden Hülse bildet die Endfläche 12a des Katalysatorkörpers 12. Die Aussenfläche der zweiten Wand 22b der sich in der Fig. 3 rechts aussen befindenden Hülse 22 bildet die Endfläche 12b des Katalysatorkörpers 12. Die Aussenflächen der dritten Wände 22c der drei Hülsen 22 bilden zusammen die Grundfläche 12c des Katalysatorkörpers 12. Die Aussenflächen der vierten Wände 22d der drei Hülsen 22 bilden zusammen die Deckfläche 12d des Katalysatorkörpers 12. Die dritten Ränder 25c, 26c der Blechelemente der drei Blöcke 21 und die bei diesen Rändern vorhandenen Ränder der Hülsen-Wände bilden zusammen die innere Mündungsfläche 12e. Die vierten Ränder 25d, 26d der Blechelemente der drei Blöcke 21 bilden zusammen mit den mit diesen Rändern bündigen Rändern der Hülsen-Wände die äussere Mündungsfläche 12f. Die Durchgänge 29 haben in den Mündungsflächen 12e, 12f liegende Mündungen.

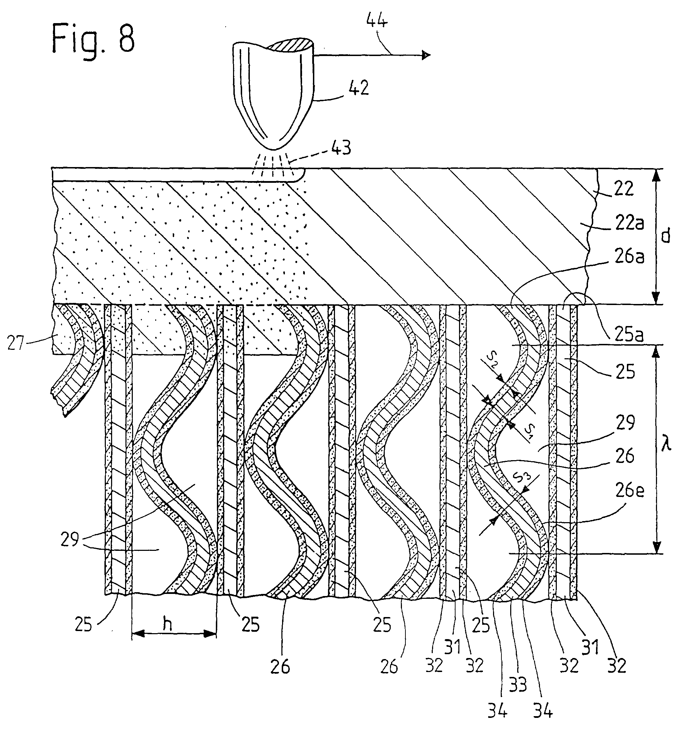

Jedes Blechelement 25, 26 besitzt einen in der Fig. 8 ersichtlichen, metallischen, aus Stahl bestehenden Kern 31 bzw. 33, der aus einer Blechlamelle gebildet ist. Auf beiden einander abgewandten Flächen der Kerne bzw. Blechlamellen der Blechelemente 25, 26 ist ein Überzug 32 bzw. 34 aufgebracht, der die beiden Flächen des Kerns 31, 33 vollständig bedeckt. Jeder Überzug 32 bzw. 34 besteht zum grössten Teil aus dem nicht-metallischen, porösen "wash coat". Jeder Überzug enthält ferner katalytisch aktives Material, das mindestens ein Edelmetall, zum Beispiel Platin und Rhodium aufweist und beispielsweise die dem Kern 31 bzw. 33 abgewandte Oberfläche jedes "wash coats" mindestens einigermassen vollständig bedeckt.

Jedes Paket 24 und dessen Blechelemente 25, 26 haben eine parallel zu den ersten und zweiten Rändern 25a, 26a bzw. 25b, 26b der Blechelemente gemessene Abmessung a. Diese ist gleich dem Abstand der dritten Ränder 25c, 26c von den vierten Rändern 25d, 26d und beträgt zum Beispiel ungefähr 30 mm. Jedes Paket und dessen Blechelemente 25, 26 haben eine in der Draufsicht auf die Blechelemente parallel zu den dritten und vierten Rändern 25c, 25d, 26c, 26d der Blechelemente 25 bzw. 26 und rechtwinklig zu den Wellen 26e sowie parallel zu den sich an diese anschmiegenden, ebenen Schmiegeflächen gemessene Abmessung b. Diese ist gleich dem in der Draufsicht auf die Blechelemente gemessenen Abstand der ersten Ränder 25a, 26a von den zweiten Rändern 25b, 26b der Blechelemente und mindestens annähernd gleich dem Abstand der einander zugewandten Innenflächen der Wände 22a, 22b einer Hülse 22. Die Abmessung b beträgt vorzugsweise höchstens 50 mm, vorzugsweise mindestens 20 mm, zweckmässigerweise 30 mm bis 40 mm und nämlich zum Beispiel ungefähr 35 mm. Jedes Paket 24 hat rechtwinklig zu den ebenen Blechelementen 25 und den genannten, ebenen Schmiegeflächen eine Abmessung c. Diese ist zum Beispiel grösser als die Abmessung b und beträgt vorzugsweise 60 mm bis 80 mm und zum Beispiel ungefähr 70 mm. Die Wände der Hülsen 22 haben alle eine gleich grosse Dicke d. Diese ist vorzugsweise höchstens 2 mm und zum Beispiel ungefähr 1,5 mm. Jeder Katalysatorkörper 12 hat rechtwinklig zu den Endflächen 12a, 12b eine Länge L. Bei einem Katalysatorkörper mit drei Blöcken 21 ist die Länge L = 3b + 6d. Wenn also zum Beispiel b gleich 35 mm und d gleich 1,5 mm sind, wird die Länge L gleich 114 mm.

Die in der Fig. 8 mit s₁ bezeichnete Dicke der metallischen Kerne 31, 33 beträgt vorzugsweise höchstens 0,1 mm und zum Beispiel ungefähr 0,05 mm. Die Dicke s₂ der Überzüge 32 und 34 beträgt vorzugsweise höchstens 0,1 mm und zum Beispiel ungefähr 0,03 mm. Die Dicke S₃ eines bei beiden einander abgewandten Flächen Überzüge 32, 34 aufweisenden Blechelements 25 bzw. 26 beträgt dementsprechend höchstens 0,3 mm und zum Beispiel ungefähr 0,11 mm. In der Fig. 8 ist auch noch die Wellenhöhe h abgegeben. Diese ist zwischen einander abgewandten Flächen von Wellenscheitel zu Wellenscheitel eines mit Überzügen 34 versehenen, zweiten Blechelements 26 gemessen und ist dementsprechend gleich dem Abstand der einander zugewandten Flächen von zwei einander benachbarten, ebenen Blechelementen 25. Die Wellenhöhe h beträgt vorzugsweise höchstens 1 mm und zum Beispiel ungefähr 0,5 mm bis 0,7 mm. Die in der Fig. 8 ebenfalls angegebene Wellenlänge λ ist vorzugsweise mindestens gleich der Wellenhöhe h und beträgt vorzugsweise höchstens das Vierfache der Wellenhöhe. Die Wellenlänge kann beispielsweise ungefähr 1 mm bis 2 mm betragen. Ein Paket von Blechelementen hat in einem zu den Wellen rechtwinkligen Querschnitt vorzugsweise mindestens 150 Durchgänge pro cm² und zum Beispiel ungefähr 193 Durchgänge pro cm² (ungefähr 1250 Durchgänge pro Quadratzoll). Es sei noch angemerkt, dass die Dicken der Blechelemente und die Wellenhöhen sowie die Wellenlängen in den verschiedenen Figuren nicht massstäblich gezeichnet sind und dass zum Beispiel die Dicken der Blechelemente, die Wellenhöhe und die Wellenlänge im Vergleich zur Abmessung b in Wirklichkeit kleiner sind als in der Fig. 4.

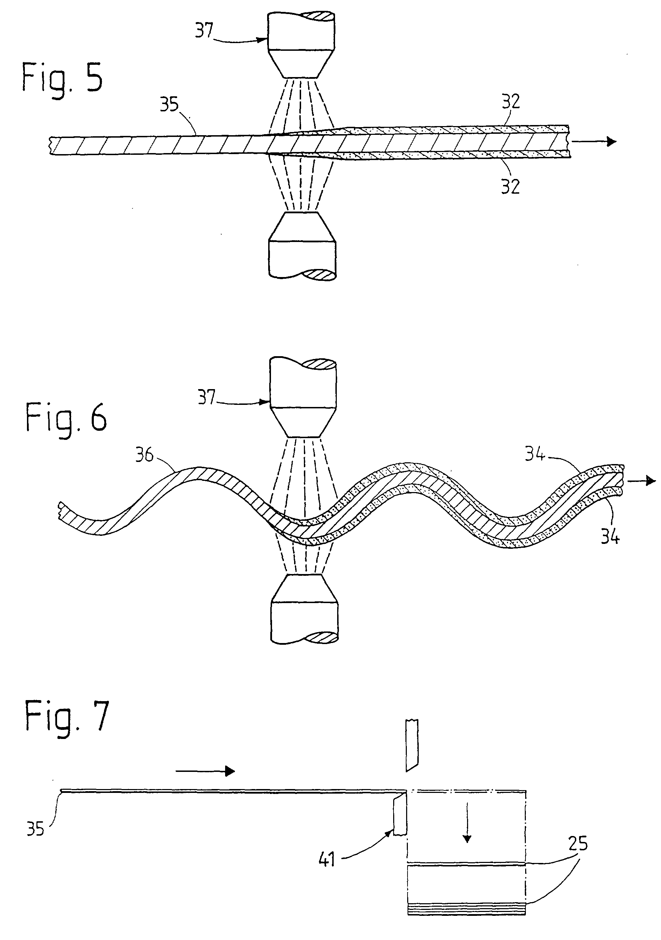

Bei der Herstellung der Katalysatormittel 11 kann man zum Beispiel zuerst Hülsen 22 mit den vorgesehenen Abmessungen und Blechelemente 25, 26 mit Überzügen und den vorgesehenen Abmessungen herstellen. Die Hülsen 22 können zum Beispiel von einem Rohr mit einem im Querschnitt viereckförmigen Mantel abgeschnitten werden, der bei einer in seiner Längsrichtung verlaufenden Schweissnaht verschweisst ist. Für die Bildung der Blechelemente 25, 26 kann man zuerst einen in der Fig. 5 ersichtlichen, ebenen, bandförmigen Träger 35 und einen in der Fig. 6 ersichtlichen, bandförmigen Träger 36 mit quer zu seiner Längsrichtung verlaufenden Wellen herstellen. Die bandförmigen Träger 35, 36 bestehen aus blankem Blech und haben eine Breite, die gleich der vorgesehenen Abmessung a ist. Die Träger werden dann in ihrer Längsrichtung an einer Sprühvorrichtung 37 vorbeitransportiert, wie es in den Figuren 5, 6 durch Pfeile angedeutet ist. Die beiden einander abgewandten Flächen der Träger 35, 36 werden mittels der Sprühvorrichtung 37 in einem Durchgang oder in mehreren Durchgängen mit flüssigem Überzugsmaterial besprüht, das nach dem Trocknen Überzüge bildet, die in den Figuren 5, 6 gleich wie die Überzüge der fertigen Blechelemente mit 32 bzw. 34 bezeichnet sind und die Träger über die ganzen Breiten und in allen Richtungen unterbruchslos bedecken. Der mit Überzügen versehene Träger 35 wird dann in seiner Längsrichtung schrittweise einer in der Fig. 7 dargestellten Trennvorrichtung 41 zugeführt und von dieser in ebene Blechelemente 25 getrennt, d.h. zerschnitten, deren metallische Kerne 31 aus Abschnitten des ursprünglich bandförmigen Trägers 35 bestehen. Der gewellte, mit Überzügen versehene Träger 36 wird analog in gewellte Blechelemente 26 zerschnitten.

Dann werden abwechselnd Blechelemente 25, 26 aufeinander gestapelt und die dabei gebildeten Stapel oder Pakete 24 in Hülsen 22 eingesetzt. Danach werden die Blechelemente bei ihren Rändern 25a, 26a, 25b, 26b durch vorübergehendes Schmelzen von metallischem Material fest mit den Wänden 22a bzw. 22b verbunden, nämlich verschweisst. Zum Verschweissen wird mindestens eine in der Fig. 8 angedeutete Schweissvorrichtung 42 mit mindestens einer Elektrode verwendet. Beim Verschweissen kann man beispielsweise nacheinander bei jeder Wand 22a, 22b zwei streifenförmige Bereiche der Wand mit den Blechelementen verschweissen. Die Hülse 22 wird beispielsweise derart angeordnet, dass sich ihre gerade zu verschweissende Wand 22a oberhalb der Blechelemente 25, 26 befindet und ungefähr horizontal ist. Mit der Elektrode wird auf der den Blechelementen 25, 26 abgewandten Seite der mit diesen zu verschweissenden Wand 22a der Hülse 22 ein Lichtbogen 43 erzeugt. Die Elektrode wird zum Beispiel kontinuierlich in der Richtung des Pfeils 44 rechtwinklig zu dem Rändern 25a, 26a der Blechelemente 25 bzw. 26 entlang der Wand 22a relativ zur Hülse 22 bewegt. Die Schweissvorrichtung ist ferner ausgebildet, um eine das freie Ende der Elektrode und den Lichtbogen umhüllende Hülle aus einem Inertgas, beispielsweise mindestens einem Edelgas, oder Kohlendioxid zu erzeugen. Beim Schweissvorgang wird ein streifenförmiger Bereich der Wand 22a vorübergehend erweicht und mehr oder weniger geschmolzen. Ferner kann zum Beispiel noch ein Zusatzwerkstoff zugeführt werden. Dies kann in Form eines nicht gezeichneten, separaten Schweissdrahtes oder durch Verwenden einer den Zusatzwerkstoff aufweisenden, beim Schweissen abschmelzenden Elektrode geschehen. Es fliesst dann vorübergehend geschmolzenes metallisches Material, nämlich Wand-Material und eventuell geschmolzener Zusatzwerkstoff zwischen an die Ränder 25a, 26a angrenzende Bereiche der Blechelemente 25, 26 hinein. Das metallische, vorübergehend geschmolzene, in den Figuren 3, 4 und 8 punktierte Material kann dann auch Bereiche der Überzüge 32, 34 bedecken und in Poren von diesen eindringen. Das zwischen Bereiche der Blechelemente 25, 26 hineinfliessende Material bildet nach seiner Verfestigung in den Figuren 4 und 8 ersichtlichen Erhöhungen, die von der restlichen, ebenen Innenfläche der Wand 22a weg in das Innere der Hülse ragen. Die Menge des zugeführten Zusatzwerkstoffs wird derart bemessen, dass der Zusatzwerkstoff das nach innen fliessende Wand-Material mindestens annähernd ersetzt, so dass kein durchgehender Schlitz in der Wand entsteht. Dabei soll jedoch bei der Schweissverbindung 27 vorzugsweise kein über die restliche, ebene Aussenfläche der Wand nach aussen vorstehender Wulst, sondern eher eine kleine Vertiefung gebildet werden, so dass die Hülsen 22 nachher ohne Nachbearbeitung mit den ebenen Aussenflächen aneinander anliegen können. Beim Schweissvorgang wird beispielsweise auch ein sich momentan in der Nähe des Lichtbogens 43 befindender Randbereich eines Blechelements durch die Wand 22a hindurch erhitzt und ebenfalls erweicht und/oder mehr oder weniger geschmolzen, so dass die Kerne 31, 33 der Blechelemente mit der Wand verschmelzen. Beim Verschweissen können die Überzüge 32, 34 zwar möglicherweise ein wenig beschädigt werden. Allfällige Beschädigungen der Überzüge sind jedoch auf sehr kleine, an die verschweissten Randabschnitte der Blechelemente angrenzende Bereiche von diesen beschränkt.

Der Katalysator 1 kann für seine Verwendung beispielsweise in eine Abgasleitung einer Auspuff-Einrichtung des Benzin-Verbrennungsmotors eines Automobils eingebaut werden. Beim Betrieb des Katalysators 1 entsteht in diesem eine in der Fig. 1 durch Pfeile dargestellte Abgas-Strömung. Das Abgas strömt durch den Einlass 8 in den inneren Hohlraum 16, wird in diesem umgelenkt und strömt bei den als Abgas-Eintrittsflächen dienenden, einander zugewandten, inneren, zweiten Mündungsflächen 12e der zwei Katalysatorkörper 12 in die inneren Enden der Durchgänge 29 hinein. Das Abgas strömt dann durch die Durchgänge 29 zu den einander abgewandten, äusseren Mündungsflächen 12f der beiden Katalysatorkörper 12. Das Abgas wird beim Durchströmen der Durchgänge 29 katalytisch behandelt, insbesondere gereinigt sowie entgiftet, tritt bei den äusseren, als Abgas-Austrittsflächen dienenden Mündungsflächen 12f wieder aus den Katalysatorkörpern 12 aus und strömt dann durch den äusseren Hohlraum 17 zum Auslass 9.

Der sich vom zylindrischen Abschnitt 8a des Einlasses 8 zum inneren Hohlraum 16 hin erstreckende Übergangsabschnitt 8b des Einlasses 8 trägt dazu bei, dass beim Einströmen des Abgases in den inneren Hohlraum 16 praktisch keine Turbulenz und nur ein geringer Druckverlust entsteht.

Die Katalysatorkörper 12 sind beispielsweise ausschliesslich bei den ersten Endflächen 12a mechanisch mit der Wandung 4 des Gehäuses 3 verbunden, so dass die Katalysatorkörper nur bei den Endflächen 12a Wärme über feste metallische Teile durch Wärmeleitung in die Umgebung abgeben können. Ferner strömt das Abgas aus dem Einlass 8 unmittelbar in den inneren Hohlraum 16. Dieser ist durch die Katalysatorkörper 12 und die Platten 13 praktisch vollständig von der Wandung 4 des Gehäuses 3 getrennt. Das Abgas kann dementsprechend zwischen dem Ausströmen aus der Mündungsöffnung des Einlasses 8 und dem Einströmen in die Katalysatorkörper 12 praktisch keine Wärme an die Umgebung abgeben. Die beiden Katalysatorkörper 12 geben ebenfalls nur relativ langsam Wärme über die Gehäuse-Wandung an die Umgebung ab. Bei einem Kaltstart - d.h. wenn der Katalysator 1 und der Motor beim Starten des letzteren noch Umgebungstemperatur haben - werden daher mindestens die an den inneren Hohlraum 16 angrenzenden Bereiche der Katalysatorkörper 12 durch das Abgas rasch auf eine Temperatur erwärmt, die eine wirkungsvolle katalytische Behandlung des Abgases ermöglicht.

Die Neigung der inneren Mündungsflächen 12e gegen die Achse 2 und die daraus mit wachsendem Abstand vom Einlass resultierende, lineare Abnahme der Querschnittsfläche des inneren Hohlraums 16 bewirken, dass das Abgas beim Einströmen in die Katalysatorkörper 12 gleichmässig über die ganzen, relativ grossen, als Abgas-Eintrittsfläche dienenden, inneren Mündungsflächen 12e und dementsprechend gleichmässig über alle Durchgänge 29 verteilt wird. Dies ermöglicht eine gleichmässige Ausnutzung aller Durchgänge 29 für die katalytische Behandlung und trägt dazu bei, dass die Katalysatormittel klein sowie leicht ausgebildet und kostengünstig hergestellt werden können und trotzdem nur einen kleinen Druckverlust verursachen.

Die kleinen Querschnittabmessungen der Durchgänge 29 gewährleisten, dass das Abgas beim Durchströmen der Durchgänge einen intensiven Kontakt mit dem katalytisch aktiven Material der Überzüge 32 und 34 hat. Der intensive Kontakt des Abgases mit dem katalytisch aktiven Material ergibt einen hohen katalytischen Wirkungsgrad. Dieser hohe katalytische Wirkungsgrad trägt dazu bei, dass die Katalysatormittel und der ganze Katalysator - bezogen auf eine vorgegebene, maximale Strömungsrate des durch die beiden Katalysatorkörper strömenden Abgases - verhältnismässig klein und leicht ausgebildet werden kann. Dementsprechend erfordert die Herstellung der Katalysatormittel nur eine verhältnismässig geringe Menge des aus teuren Edelmetallen bestehenden, katalytisch aktiven Materials und auch nur eine kleine Menge des ebenfalls ziemlich teuren, die Kerne 31, 33 bildenden, metallischen Materials.

Das Abgas kann sich nach dem Ausströmen aus den Katalysatorkörpern 12 auf den die Katalysatormittel 11 im Querschnitt vollständig umschliessenden, äusseren Hohlraum 17 verteilen. Wenn das Abgas von den Katalysatorkörpern durch den äusseren Hohlraum 17 in den Auslass-Durchgang 18 strömt, entsteht daher im äusseren Hohlraum ebenfalls nur ein kleiner Druckverlust.

Die Katalysatormittel 11 werden beim Betrieb - ausgehend von der Umgebungstemperatur - auf Temperaturen erhitzt, die mindestens stellenweise mehr als 500° C betragen. Beim Unterbrechen oder Beenden des Betriebs werden die Katalysatormittel wieder auf Umgebungstemperatur abgekühlt, wobei sich die verschiedenen Teile der Katalysatormittel 11 ausdehnen und wieder zusammenziehen. Ferner verursacht der das Abgas erzeugende Motor Vibrationen, welche zusammen mit den durch das Fahren des Automobils verursachten Beschleunigungen auf den Katalysator einwirken. Die Wellen 26e versteifen die Blechelemente 26, wobei die Wellen 26e auch die an ihnen anliegenden, ebenen Blechelemente 25 abstützen. Da die Abmessung b der Blechelemente wesentlich kleiner ist als die Länge L eines ganzen Katalysatorkörpers 12, verformen und verbiegen sich die Blechelemente beim Betrieb infolge der Temperaturänderungen und der auf die Katalysatormittel einwirkenden Beschleunigungen nur relativ wenig. Dies trägt zusammen mit den die Blechelemente mit den Wänden 22a und 22b verbindenden Schweissverbindungen 27 und der Versteifung durch die Wellen 26e dazu bei, dass die Blechelemente ihre vorgesehenen Formen und Abmessungen auch nach einer langen Verwendung des Katalysators und nach vielen Änderungen und Unterbrüchen der Abgas-Zufuhr und dabei auftretenden Temperaturänderungen zumindest weitgehend beibehalten. Dabei kann insbesondere auch weitgehend und praktisch vollständig vermieden werden, dass einander benachbarte Blechelemente in einem quer zu den Wellen verlaufenden Querschnitt über mehrere Wellenlängen voneinander weggebogen werden.

Da die Wände der Hülsen 22 im Vergleich zu den Aussenabmessungen der Katalysatorkörper und insbesondere im Vergleich zur Länge L relativ dünn sind, nehmen die Wände der Hülsen 22 und insbesondere die Wände 22a, 22b nur einen relativ kleinen Teil der gesamten Oberfläche der an den inneren Hohlraum 16 angrenzenden, inneren Mündungsfläche 12e eines Katalysatorkörpers ein. Dementsprechend bewirken die Hülsen 22 nur eine kleine Reduktion des für die katalytische Behandlung nutzbaren Volumens der Katalysatorkörper 12. Ferner erhöhen die Hülsen 22 das Gewicht der Katalysatorkörper nur relativ wenig.

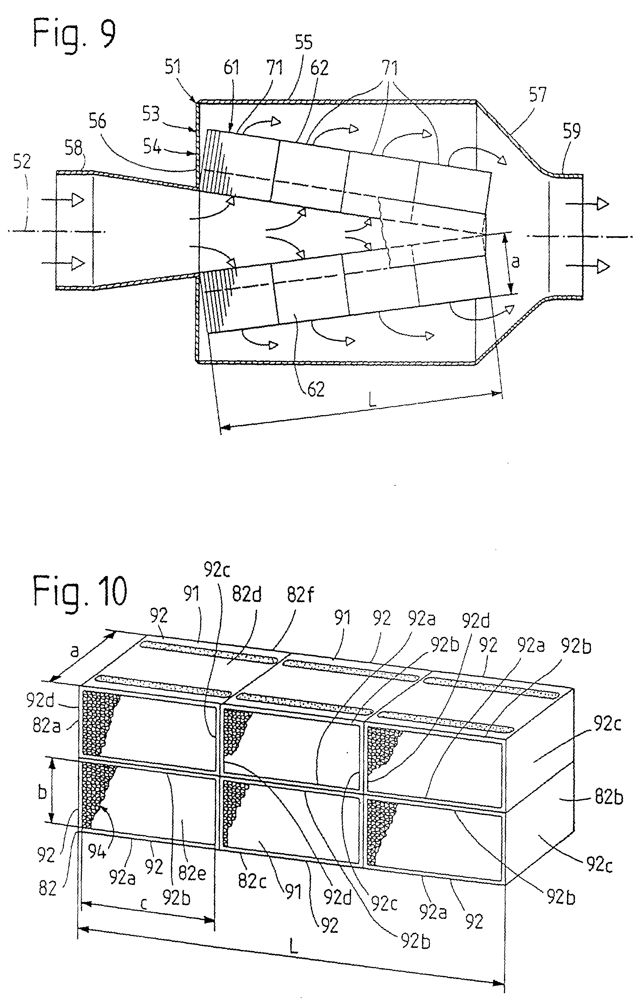

Der in der Fig. 9 ersichtliche Katalysator 51 definiert eine Achse 52 und hat ein Gehäuse 53 mit einer Wandung 54. Die letzte hat einen Mantel 55, der zur Achse 52 parallel, aber im Querschnitt eventuell oval oder abgeflacht ist, so dass der Mantel eine parallel zur Zeichenebene gemessene Querschnittsabmessung hat, die grösser ist als die rechtwinklig zur Zeichenebene gemessene Querschnittsabmessung. Das Gehäuse 53 hat im übrigen zwei Endwände 56, 57, einen Einlass 58 und einen Auslass 59. Das Gehäuse 53 enthält Katalysatormittel 61 mit zwei Katalysatorkörpern 62, die im gezeichneten Längsschnitt V-förmig angeordnet sind. Jeder Katalysatorkörper 62 besitzt vier starr miteinander verbundene Blöcke 71. Jeder Block 71 weist eine Hülse und ein in dieser angeordnetes Paket von Blechelementen auf, die ähnlich wie die Blechelemente 25 und 26 ausgebildet sind. Die parallel zu den Wellen gemessene Abmessung a der Blechelemente und Hülsen eines Blocks 71 ist zum Beispiel ein wenig grösser als die Abmessung a der Blechelemente 25, 26 und beträgt zum Beispiel ungefähr 40 mm. Die in der Fig. 9 nicht dargestellte, rechtwinklig zu den Wellen gemessene Abmessung b der Blechelemente der Blöcke 71 ist zum Beispiel gleich wie bei den Blechelementen 25, 26 der Blöcke 21 ungefähr 35 mm. Die Wände der Hülsen der Blöcke 71 können zum Beispiel gleich wie die Wände der Hülsen 22 der Blöcke 21 eine Dicke von 1,5 mm haben. Die Länge L eines Katalysatorkörpers 62 beträgt dann zum Beispiel ungefähr 152 mm. Soweit vorgängig nichts anderes geschrieben wurde, kann der Katalysator 51 ähnlich ausgebildet sein wie der Katalysator 1.

Der in der Fig. 10 gezeichnete Katalysatorkörper 82 ist wie die Katalysatorkörper 12 und 62 quaderförmig und hat zwei einander abgewandte Endflächen 82a, 82b, eine Grundfläche 82c, eine dieser abgewandte Deckfläche 82d, eine innere Mündungsfläche 82e und eine dieser abgewandte, äussere Mündungsfläche 82f. Der Katalysatorkörper 82 kann beispielsweise zusammen mit einem dazu spiegelsymmetrischen Katalysatorkörper derart in einem Gehäuse angeordnet werden, dass seine innere Mündungsfläche 82e an einen inneren Hohlraum und seine äussere Mündungsfläche 82f an einen äusseren Hohlraum angrenzt.

Der Katalysatorkörper 82 hat zwei übereinander angeordnete Reihen von Blöcken 91. Jeder Block 91 hat eine im Querschnitt rechteckförmige Hülse 92 mit einer ersten Wand 92a, einer dazu parallelen, zweiten Wand 92b, einer dritten Wand 92c und einer zu dieser parallelen, vierten Wand 92d. Die Hülsen 92 der oberen Reihe liegen mit der ersten Wand 92a an der zweiten Wand 92b einer Hülse 92 der unteren Reihe an. Ferner liegt die mittlere Hülse von jeder der beiden Reihen mit ihren Wänden 92c und 92d an der Wand 92d bzw. 92c einer benachbarten Hülse an. Die aneinander anliegenden Hülsen sind miteinander verschweisst. Jede Hülse 92 enthält ein Paket 94 von abwechselnd aufeinander folgenden, ebenen und Wellen aufweisenden Blechelementen. Die ebenen Blechelemente und die von den gewellten Blechelementen definierten, ebenen Schmiegeflächen sind parallel zu den Endflächen 82a, 82b des Katalysatorkörpers und zu den Wänden 92c, 92d der Hülsen 92.

Die Endfläche 82a, 82b des Katalysatorkörpers 82 sind durch die Wände 92d bzw. 92c von zwei Hülsen 92 gebildet. Die Grundfläche 82c und die Deckfläche 82d sind durch die Wände 92a bzw. 92b der unteren bzw. oberen Hülsen gebildet. Die innere Mündungsfläche 82e des Katalysatorkörpers 82 ist durch die dritten Ränder der Blechelemente und die mit diesen Rändern bündigen Ränder der Hülsen 92 gebildet. Die äussere Mündungsfläche 82f ist durch die vierten Ränder der Blechelemente und die mit diesen Rändern bündigen Ränder der Hülsen gebildet.

Die parallel zu den Wellen gemessene Abmessung a der Blechelemente und Hülsen 92 kann zum Beispiel 30 mm bis 100 mm betragen. Die rechtwinklig zu den Wellen gemessene Abmessung b der Blechelemente kann zum Beispiel gleich wie bei den Blechelementen 25, 26 ungefähr 35 mm betragen. Die rechtwinklig zu den ebenen Blechelementen gemessene Abmessung c eines Pakets von Blechelementen kann zum Beispiel gleich wie bei den Katalysatorkörpern 12 etwa 70 mm betragen. Die Wände der Hülsen 92 können zum Beispiel 1,5 mm dick sein. Die Länge L des ganzen Katalysatorkörpers wird dann ungefähr 219 mm.

Die Herstellung der Katalysatorkörper, diese selbst und die Katalysatoren können noch auf andere Weisen geändert werden.

Es besteht beispielsweise die Möglichkeit, mit zwei oder sogar mit vier Elektroden gleichzeitig zwei oder vier streifenförmige Bereiche der Wände mit Randabschnitten der Blechelemente zu verschweissen. Ferner können die Schweissverbindungen eventuell ohne Zugabe eines Zusatzwerkstoffs erstellt werden.

Statt jedes Paket von Blechelementen einzeln in eine Hülse einzusetzen, kann man eventuell bei der Herstellung der Katalysatormittel ein Rohrstück bereitstellen, dessen Länge ein Mehrfaches der Abmessung a beträgt. Ferner kann man einen Stapel von Überzüge aufweisenden Blechelementen bereitstellen, deren Längen ungefähr gleich der Länge des Rohrstücks ist. Diese Blechelemente können dann in das Rohrstück eingebracht werden. Danach kann man die Blechelemente bei streifenförmigen Bereichen mit zwei Wänden des Rohrstücks verschweissen. Dann kann man das Rohrstück zusammen mit den in diesem enthaltenen Blechelementen mit Hilfe einer Trennvorrichtung derart in Stücke trennen, dass Blöcke 21 mit einer Hülse 22 und einem Paket 24 von Blechelementen mit der Abmessung a entstehen.

Ferner kann man den ersten mit dem zweiten Rand jedes Blechelements bei mehr als zwei voneinander in Abstand stehenden Randabschnitten mit einer Wand verschweissen. Statt dessen wäre es auch möglich, jeden ersten und zweiten Rand entlang seiner ganzen Länge oder entlang von nur einem einzigen zusammenhängenden, aber dann relativ langen Randabschnitt mit einer Wand zu verschweissen.

Ferner könnte man zum Verschweissen der Blechelemente mit den Wänden mindestens eine Schweissvorrichtung verwenden, die anstelle von mindestens einer Elektrode mindestens einen Gasbrenner aufweist. Die Blechelemente und eine mit diesen zu verschweissende Wand können dann beim Schweissen mit einer Flamme von der den Blechelementen abgewandten Seite der Wand her erhitzt werden.

Die Abmessungen der Hülsen und Blechelemente können in gewissen Grenzen variiert werden. Die rechtwinklig zu den Wellen gemessene Abmessung b der Blechelemente beträgt jedoch vorzugsweise höchstens 50 mm, vorzugsweise mindestens 20 mm und zum Beispiel 30 mm bis 40 mm.

Ferner kann ein Katalysatorkörper auch mehr als vier in einer Reihe angeordnete Blöcke oder eventuell nur zwei Blöcke mit je einer Hülse und einem Paket von Blechelementen aufweisen. Die Länge L eines Katalysatorkörpers kann dann beispielsweise in einem Bereich von etwa 60 mm bis 500 mm liegen.

Eventuell kann sogar ein Katalysatorkörper hergestellt werden, der nur einen einzigen Block mit einem zwischen Wänden einer Hülse angeordneten Paket von Blechelementen aufweist.

Des weiteren könnte jeder Block statt einer Hülse nur zwei separate Wände aufweisen, zwischen denen ein Paket von Blechelementen angeordnet ist und von denen die eine, erste Wand mit den ersten Rändern und die andere, zweite Wand mit den zweiten Rändern der Blechelemente verschweisst ist.

Die Blechelemente können in der Draufsicht zum Beispiel quadratförmig statt rechteckförmig sein. Des weiteren könnten die Katalysatorkörper Grund- und Deckflächen aufweisen, welche die Form eines schiefwinkligen Parallelogramms haben. Die Formen der Hülsen und Blechelemente wären dann entsprechend anzupassen, wobei die Blechelemente in der Draufsicht dann ebenfalls schiefwinklig sein können.

Zudem könnte man eventuell vorsehen, dass alle Blechelemente eines Pakets Wellen haben.

Die Mäntel der Gehäuse der Katalysatoren 1 und 51 können auf den sich in der Fig. 2 oben und unten befindenden Seiten abgeflacht oder im Querschnitt ungefähr rechteckförmig sein und an den Grundflächen 12c sowie Deckflächen 12d der Katalysatorkörper 12 bzw. den ensprechenden Flächen der Katalysatorkörper 62 anliegen. Des weiteren könnte man einen Katalysator herstellen, dessen Gehäuse mehr als zwei Katalysatorkörper, beispielsweise drei oder vier Katalysatorkörper enthält. Diese können dann parallel zur Achse des Katalysators und derart um diese herum verteilt sein, dass sie im Querschnitt zusammen einen inneren Hohlraum begrenzen. Der letztere kann dann ein ungefähr pyramidenförmiges Begrenzungselement enthalten, das zusammen mit den inneren Mündungsflächen der Katalysatorkörper einen freien Hohlraumbereich begrenzt, dessen Querschnittsfläche vom Einlass weg ungefähr oder genau linear abnimmt.

## Patentansprüche

1. Verfahren zur Herstellung eines Katalysatorkörpers (12, 62, 82) für die katalytische Behandlung von Gas, insbesondere von Abgas eines Verbrennungsmotors, wobei der Katalysatorkörper (12, 62, 82) mindestens ein Paket (24, 94) aufeinander gestapelter Blechelemente (25, 26) aufweist, die zusammen Durchgänge (29) für das Gas begrenzen, dadurch gekennzeichnet, dass derart Blechelemente (25, 26) mit einem metallischen, zwei einander abgewandte Flächen aufweisenden Kern (31, 33), mit ein katalytisch aktives Material aufweisenden Überzügen (32, 34) und mit je einem ersten Rand (25a, 26a) sowie je einem diesem abgewandten, zweiten Rand (25b, 26b) hergestellt werden, dass die Überzüge (32, 34) die beiden Flächen der Kerne (31, 33) vollständig bedecken, dass für das bzw. jedes Paket (24, 94) eine erste Wand (22a, 92a) und eine zweite Wand (22b, 92b) bereit gestellt werden, dass die zur Bildung des bzw. eines Pakets (24, 94) bestimmten, die Überzüge (32, 34) aufweisenden Blechelemente (25, 26) zwischen den zwei Wänden (22a, 92a) angeordnet werden, dass die ersten Ränder (25a, 26a) einer im wesentlichen ebenen sowie glatten Innenfläche der ersten Wand (22a, 92a) und die zweiten Ränder (25b, 26b) einer im wesentlichen ebenen sowie glatten Innenfläche der zweiten Wand (22b, 92b) zugewandt werden, und dass die vorgängig mit Überzügen (32, 34) versehenen Blechelemente (25, 26) bei mindestens einem Randabschnitt von jedem ihrer beiden genannten Ränder (25a, 25b, 26a, 26b) durch Schmelzen von metallischem Material, das Material der Wände (22a, 22b, 92a, 92b) aufweist, fest mit den beiden Wänden (22a, 22b, 92a, 92b) verbunden werden.

2. Verfahren nach Anspruch 1, dadurch gekennzeichnet, dass die Blechelemente (25, 26) derart bemessen und zwischen den beiden Wänden (22a, 22b, 92a, 92b) angeordnet werden, dass ihre genannten Ränder (25a, 25b, 26a, 26b) mindestens im wesentlichen über ihre ganzen Längen den Wänden (22a, 22b, 92a, 92b) zugewandt sind.

3. Verfahren nach Anspruch 1 oder 2, dadurch gekennzeichnet, dass die Innenflächen der Wände (22a, 22b, 92a, 92b) zueinander parallel angeordnet werden und dass alle zur Bildung desselben Pakets (24, 94) dienenden Blechelemente (25, 26) derart hergestellt werden, dass ihre genannten Ränder (25a, 25b, 26a, 26b) in der Draufsicht vollständig gerade und parallel zueinander sind und dass die von einem zum andern der beiden genannten Ränder (25a, 25b, 26a, 26b) gemessene Abmessung b der Blechelemente (25, 26) in einer Draufsicht auf diese bei allen zum gleichen Paket (24, 94) gehörenden Blechelementen (25, 26) gleich gross ist.

4. Verfahren nach einem der Ansprüche 1 bis 3, dadurch gekennzeichnet, dass das mindestens eine Paket (24, 94) derart aus abwechselnd aufeinander folgenden, ebenen Blechelementen (25) und Blechelementen (26) mit Wellen (26e) gebildet wird, dass die Wellen (26e) parallel zu den genannten Rändern (25a, 25b, 26a, 26b) sowie zu den Wänden (22a, 22b, 92a, 92b) verlaufen und die aufeinanderfolgenden Blechelemente (25, 26) einander bei Wellenscheiteln der Wellen (26e) berühren, wobei die von Wellenscheitel zu Wellenscheitel gemessene Wellenhöhe h vorzugsweise höchstens 1 mm beträgt und in einem zu den Wellen (26e) rechtwinkligen Querschnitt vorzugsweise mindestens 150 Durchgänge (29) pro cm² vorhanden sind.

5. Verfahren nach Anspruch 4, dadurch gekennzeichnet, dass die Wellen (26e) aufweisenden Blechelemente (26) überall mit Wellen (26e) versehen sind und dass jedes Blechelement (25, 26) derart hergestellt wird, dass die Überzüge (32, 34) sich bis zu den nachher mit den Wänden (22a, 22b, 92a, 92b) verbundenen Rändern (25a, 25b, 26a, 26b) erstrecken.

6. Verfahren nach einem der Ansprüche 1 bis 5, dadurch gekennzeichnet, dass mindestens ein metallischer, zur Bildung mehrerer Blechelemente (25, 26) dienender Träger (35, 36) mit zwei einander abgewandten Flächen gebildet wird, dass die beiden letzteren mit unterbruchslosen Überzügen (32, 34) versehen werden und dass der Träger (35, 36) nach dem Aufbringen der Überzüge (32, 34) in viereckförmige Stücke zerschnitten wird, von denen jedes ein Blechelement (25, 26) bildet.

7. Verfahren nach einem der Ansprüche 1 bis 6, dadurch gekennzeichnet, dass jeder genannte Rand (25a, 26a) von jedem Blechelement (25, 26) bei mindestens zwei voneinander in Abstand stehenden Randabschnitten durch Schmelzen von metallischem Material fest mit der am betreffenden Rand (25a, 26a) anliegenden Wand (22a, 92a) verbunden wird.

8. Verfahren nach einem der Ansprüche 1 bis 7, dadurch gekennzeichnet, dass die Wärme zum Verbinden der Wände (22a, 22b, 92a, 92b) mit den Blechelementen (25, 26) mit einem Lichtbogen (43) oder einer Flamme auf der den Blechelementen (25, 26) abgewandten Seite der Wände (22a, 22b, 92a, 92b) zugeführt wird.

9. Verfahren nach einem der Ansprüche 1 bis 8, dadurch gekennzeichnet, dass die Wände (22a, 22b, 92a, 92b) durch Schweissen mit den Blechelementen (25, 26) verbunden werden.

10. Verfahren nach einem der Ansprüche 1 bis 9, dadurch gekennzeichnet, dass die Wände (22a, 22b, 92a, 92b) derart mit den Blechelementen (25, 26) verbunden werden, dass beim Verbinden geschmolzenes Wand-Material und/oder geschmolzener Zusatzwerkstoff zwischen Bereiche von einander benachbarten Blechelementen (25, 26) hineinfliesst.

11. Verfahren nach Anspruch 10, dadurch gekennzeichnet, dass die Überzüge (32, 34) derart gebildet wurden, dass sie ein nicht-metallisches Material, mindestens ein Edelmetall und Poren aufweisen und dass die Wände (22a, 22b, 92a, 92b) derart mit den Blechelementen (25, 26) verbunden werden, dass beim Verbinden geschmolzenes Wand-Material und/oder geschmolzener Zusatzwerkstoff in Poren der Überzüge (32, 34) hineinfliesst.

12. Verfahren nach einem der Ansprüche 1 bis 11, dadurch gekennzeichnet, dass die beiden dem gleichen Paket (24, 94) zugeordneten Wände (22a, 22b, 92a, 92b) durch Abschnitte einer das Paket (24, 94) im Querschnitt umschliessenden, im wesentlichen viereckförmigen Hülse (22, 92) gebildet werden.

13. Verfahren nach einem der Ansprüche 1 bis 12, dadurch gekennzeichnet, dass mindestens zwei Blöcke (21, 71, 91) gebildet werden, von denen jeder zwei Wände (22a, 22b, 92a, 92b) und ein Paket (24, 94) von zwischen diesen angeordneten und in der genannten Weise mit diesen Wänden (22a, 22b, 92a, 92b) verbundenen Blechelementen (25, 26) aufweist und dass mindestens zwei solche Blöcke (21, 71, 91) fest miteinander verbunden werden.

14. Verfahren nach Anspruch 13, dadurch gekennzeichnet, dass die Blöcke (21, 71, 91) zum Verbinden derart angeordnet werden, dass mindestens eine Wand (22a, 22b, 92a, 92b) jedes Blocks (21, 71, 91) an einer Wand (22a, 22b, 92a, 92b) eines andern Blocks (21, 71, 91) anliegt, und dass die aneinander anliegenden Wände (22a, 22b, 92a, 92b) miteinander verschweisst werden.

15. Verfahren nach einem der Ansprüche 1 bis 14, dadurch gekennzeichnet, dass jedes Blechelement (25, 26) derart hergestellt wird, dass es in der Draufsicht eine von einem zum andern der beiden genannten Ränder (25a, 25b, 26a, 26b) gemessenen Abmessung b hat, die höchstens 50 mm beträgt.

16. Verfahren nach einem der Ansprüche 1 bis 15, dadurch gekennzeichnet, das die Wände (22a, 22b, 92a, 92b) derart ausgebildet werden, dass sich die im wesentlichen ebenen, glatten Innenflächen der ersten und zweiten Wand (22a, 22b, 92a, 92b) zusammenhängend über die ersten bzw. zweiten Ränder (25a, 25b, 26a, 26b) aller zu dem bzw. demselben Paket (24, 94) gehörenden Blechelemente (25, 26) erstrecken.

17. Verfahren nach einem der Ansprüche 1 bis 16, dadurch gekennzeichnet, dass beim Verbinden der Blechelemente (25, 26) mit den Wänden (22a, 22b, 92a, 92b) ein Zusatzwerkstoff zugeführt und geschmolzen wird, wobei der Zusatzwerkstoff vorzugsweise auf der den Blechelementen (25, 26) abgewandten Seiten der Wände (22a, 22b, 92a, 92b) zugeführt wird.

18. Katalysatorkörper für die katalytische Behandlung von Gas, insbesondere für die katalytische Reinigung von Abgas eines Verbrennungsmotors, mit mindestens einem Paket (24, 94) aufeinander gestapelter Blechelemente (25, 26), die zusammen Durchgänge (29) für das Gas begrenzen und von denen jedes einen metallischen Kern (31, 33) mit zwei einander abgewandten Flächen, Überzüge (32, 34) mit katalytisch aktivem Material, einen ersten Rand (25a, 26a) und einen diesem abgewandten, zweiten Rand (25b, 26b) aufweist, dadurch gekennzeichnet, dass die Überzüge (32, 34) die beiden Flächen der Kerne (31, 33) vollständig bedecken, dass für das bzw. jedes Paket (24, 94) eine erste Wand (22a, 92a) und eine zweite Wand (22b, 92b) vorhanden sind, dass die ersten Ränder (25a, 26a) jedes Blechelements (25, 26) des bzw. eines Paketes (24, 94) einer im wesentlichen ebenen, glatten Innenfläche der dem Paket (24, 94) zugeordneten, ersten Wand (22a, 92a) zugewandt sind, dass die zweiten Ränder (25b, 26b) der Blechelemente (25, 26) des bzw. eines Paketes (24, 94) einer im wesentlichen ebenen, glatten Innenfläche der dem Paket (24, 94) zugeordneten, zweiten Wand (22b, 92b) zugewandt sind und dass jedes Blechelement (25, 26) bei mindestens einem Randabschnitt von jedem der beiden genannten Ränder (25a, 25b, 26a, 26b) durch eine nach dem Aufbringen der Überzüge (32, 34) durch Schmelzen von metallischem Material erstellte Verbindung fest mit den beiden Wänden (22a, 22b, 92a, 92b) verbunden ist wobei das metallische Material Material der Wände (22a, 22b, 92a, 92b) aufweist.

19. Katalysatorkörper nach Anspruch 18, dadurch gekennzeichnet, dass jedes Blechelement (25, 26) in der Draufsicht eine von einem zum andern der beiden genannten Ränder (25a, 25b, 26a, 26b) gemessenen Abmessung b hat, die höchstens 50 mm beträgt.

20. Katalysator mit mindestens zwei Katalysatorkörpern (12, 62, 82) nach Anspruch 18 oder 19, dadurch gekennzeichnet, dass ein Gehäuse (3, 53) mit einer Wandung (4, 54), einem Einlass (8, 58) und einem Auslass (9, 59) vorhanden ist, dass die Katalysatorkörper im Gehäuse (3, 53) angeordnet sind, dass der Einlass (8, 58) mit einem zwischen den Katalysatorkörpern (12, 62, 82) vorhandenen, inneren Hohlraum (16) verbunden ist, dass zwischen der Wandung (4, 54) und den Katalysatorkörpern (12, 62, 82) ein mit dem Auslass (9, 59) verbundener, äusserer Hohlraum (17) vorhanden ist und dass die Durchgänge (29) der Katalysatorkörper (12, 62, 82) vom inneren Hohlraum (16) zum äusseren Hohlraum (17) verlaufen.

## Claims

1. Process for the production of a catalyst body (12, 62, 82) for the catalytic treatment of gas, in particular of exhaust gas from an internal combustion engine, the catalyst body (12, 62, 82) having at least one packet (24, 94) of sheet metal members (25, 26) which are stacked one on top of the other and together bound passages (29) for the gas, characterized in that sheet metal members (25, 26) which comprise a metallic core (31, 33) having two surfaces facing away from one another, comprise coatings (32, 34) having catalytically active material and comprise one first edge (25a, 26a) each and one second edge (25b, 26b) each facing away from said first edge are produced in such a way that the coatings (32, 34) completely cover the two surfaces of the cores (31, 33), that a first wall (22a, 92a) and a second wall (22b, 92b) are provided for the or each packet (24, 94), that the sheet metal members (25, 26) which are intended for forming the or a packet (24, 94) and have the coatings (32, 34) are arranged between the two walls (22a, 92a), that the first edges (25a, 26a) face an essentially flat and smooth inner surface of the first wall (22a, 92a) and the second edges (25b, 26b) face an essentially flat and smooth inner surface of the second wall (22b, 92b), and that the sheet metal members (25, 26) provided beforehand with coatings (32, 34) are firmly connected to the two walls (22a, 22b, 92a, 92b) by fusion of metallic material, which contains material of the walls (22a, 22b, 92a, 92b), at at least one edge segment of each of the two said edges (25a, 25b, 26a, 26b) of said sheet metal members.

2. Process according to Claim 1, characterized in that the sheet metal members (25, 26) have dimensions, and are arranged between the two walls (22a, 22b, 92a, 92b), such that their stated edges (25a, 25b, 26a, 26b) face the walls (22a, 22b, 92a, 92b) at least essentially over their entire lengths.

3. Process according to Claim 1 or 2, characterized in that the inner surfaces of the walls (22a, 22b, 92a, 92b) are arranged parallel to one another and that all sheet metal members (25, 26) serving to form the same packet (24, 94) are produced in such a way that their stated edges (25a, 25b, 26a, 26b) in plan view are completely straight and parallel to one another and that, in a plan view of the sheet metal members (25, 26), the dimension b of the sheet metal members (25, 26), measured from one of the two stated edges (25a, 25b, 26a, 26b) to the other, is of the same magnitude for all sheet metal members (25, 26) belonging to the same packet (24, 94).

4. Process according to any of Claims 1 to 3, characterized in that the one or more packets (24, 94) are formed from alternate flat sheet metal members (25) and sheet metal members (26) having corrugations (26e), in such a way that the corrugations (26e) are parallel to the stated edges (25a, 25b, 26a, 26b) and to the walls (22a, 22b, 92a, 92b), and the successive sheet metal members (25, 26) touch one another at summits of the corrugations (26e), the wave height h, measured from wave summit to wave summit, preferably being not more than 1 mm and preferably at least 150 passages (29) per cm² being present in a cross-section at right angles to the corrugations (26e).

5. Process according to Claim 4, characterized in that the sheet metal members (26) having corrugations (26e) are provided everywhere with corrugations (26e) and that each sheet metal member (25, 26) is produced in such a way that the coatings (32, 34) extend to the edges (25a, 25b, 26a, 26b) subsequently connected to the walls (22a, 22b, 92a, 92b).

6. Process according to any of Claims 1 to 5, characterized in that at least one metallic substrate (35, 36) which serves to form a plurality of sheet metal members (25, 26) is formed with two surfaces facing away from one another, that the two latter are provided with continuous coatings (32, 34) and that, after application of the coatings (32, 34), the substrate (35, 36) is cut into quadrilateral pieces, each of which forms a sheet metal member (25, 26).

7. Process according to any of Claims 1 to 6, characterized in that each stated edge (25a, 26a) of each sheet metal member (25, 26) is firmly connected to the wall (22a, 92a) adjacent to the relevant edge (25a, 26a), in at least two edge segments a distance apart from one another, by fusion of metallic material.

8. Process according to any of Claims 1 to 7, characterized in that the heat for connecting the walls (22a, 22b, 92a, 92b) to the sheet metal members (25, 26) is supplied by an arc (43) or a flame to that side of the walls (22a, 22b, 92a, 92b) which faces away from the sheet metal members (25, 26).

9. Process according to any of Claims 1 to 8, characterized in that the walls (22a, 22b, 92a, 92b) are connected to the sheet metal members (25, 26) by welding.

10. Process according to any of Claims 1 to 9, characterized in that the walls (22a, 22b, 92a, 92b) are connected to the sheet metal members (25, 26) in such a way that, during the connecting procedure, molten wall material and/or molten additional material flows between regions of sheet metal members (25, 26) adjacent to one another.

11. Process according to Claim 10, characterized in that the coatings (32, 34) were formed in such a way that they contain a nonmetallic material, at least one noble metal and pores and that the walls (22a, 22b, 92a, 92b) are connected to the sheet metal members (25, 26) in such a way that, during the connecting procedure, molten wall material and/or molten additional material flows into pores of the coatings (32, 34).

12. Process according to any of Claims 1 to 11, characterized in that the two walls (22a, 22b, 92a, 92b) assigned to the same packet (24, 94) are formed by segments of an essentially quadrilateral sleeve (22, 92) enclosing the packet (24, 94) in cross-section.

13. Process according to any of Claims 1 to 12, characterized in that at least two blocks (21, 71, 91) are formed, each of which has two walls (22a, 22b, 92a, 92b) and a packet (24, 94) of sheet metal members (25, 26) arranged between said walls and connected to these walls (22a, 22b, 92a, 92b) in the stated manner, and that at least two such blocks (21, 71, 91) are firmly connected to one another.

14. Process according to Claim 13, characterized in that, for connection, the blocks (21, 71, 91) are arranged in such a way that at least one wall (22a, 22b, 92a, 92b) of each block (21, 71, 91) is adjacent to a wall (22a, 22b, 92a, 92b) of another block (21, 71, 91), and that the walls (22a, 22b, 92a, 92b) adjacent to one another are welded to one another.

15. Process according to any of Claims 1 to 14, characterized in that each sheet metal member (25, 26) is produced in such a way that, in plan view, it has a dimension b, measured from one of the two stated edges (25a, 25b, 26a, 26b) to the other, which is not more than 50 mm.

16. Process according to any of Claims 1 to 15, characterized in that the walls (22a, 22b, 92a, 92b) are formed in such a way that the essentially flat, smooth inner surfaces of the first and second walls (22a, 22b, 92a, 92b) extend continuously over the first and second edges (25a, 25b, 26a, 26b) of all sheet metal members (25, 26) belonging to the or the same packet (24, 94).

17. Process according to any of Claims 1 to 16, characterized in that, during connection of the sheet metal members (25, 26) to the walls (22a, 22b, 92a, 92b), an additional material is supplied and is melted, the additional material preferably being supplied to those sides of the walls (22a, 22b, 92a, 92b) which face away from the sheet metal members (25, 26).

18. Catalyst body for the catalytic treatment of gas, in particular for the catalytic purification of exhaust gas from an internal combustion engine, having at least one packet (24, 94) of sheet metal members (25, 26) which are stacked one on top of the other and together bound passages (29) for the gas and each of which has a metallic core (31, 33) having two surfaces facing away from one another, coatings (32, 34) having catalytically active material, a first edge (25a,26a) and a second edge (25b, 26b) facing away from said first edge, characterized in that the coatings (32, 34) completely cover the two surfaces of the cores (31, 33), that a first wall (22a, 92a) and a second wall (22b, 92b) are present for the or each packet (24, 94), that the first edges (25a, 26a) of each sheet metal member (25, 26) of the or a packet (24, 94) face an essentially flat, smooth inner surface of the first wall (22a, 92a) assigned to the packet (24, 94), that the second edges (25b, 26b) of the sheet metal members (25, 26) of the or a packet (24, 94) face an essentially flat, smooth inner surface of the second wall (22b, 92b) assigned to the packet (24, 94), and that each sheet metal member (25, 26) is firmly connected to the two walls (22a, 22b, 92a, 92b) by a connection produced after application of the coatings (32, 34) by melting of metallic material, the metallic material comprising material of the walls (22a, 22b, 92a, 92b).

19. Catalyst body according to Claim 18, characterized in that each sheet metal member (25, 26) has, in plan view, a dimension b, measured from one of the two stated edges (25a, 25b, 26a, 26b) to the other, which is not more than 50 mm.

20. Catalytic converter having at least two catlyst bodies (12, 62, 82) according to Claim 18 or 19, characterized in that a housing (3, 53) having a wall (4, 54), an inlet (8, 58) and an outlet (9, 59) is present, that the catalyst bodies are arranged in the housing (3, 53), that the inlet (8, 58) is connected to an inner cavity (16) present between the catalyst bodies (12, 62, 82), that an outer cavity (17) connected to the outlet (9, 59) is present between the wall (4, 54) and the catalyst bodies (12, 62, 82) and that the passages (29) of the catalyst bodies (12, 62, 92) run from the inner cavity (16) to the outer cavity (17).

## Revendications

1. Procédé pour fabriquer un corps de catalyseur (12, 62, 82) pour le traitement catalytique de gaz, notamment de gaz d'échappement d'un moteur à combustion interne, le corps de catalyseur (12, 62, 82) présentant au moins un paquet (24, 94) d'éléments en tôle superposés (25, 26) qui délimitent ensemble des passages (29) pour le gaz, caractérisé en ce que des éléments en tôle (25, 26) sont ainsi fabriqués avec un noyau métallique (31, 33) présentant deux surfaces opposées et avec des revêtements (32, 34) contenant une matière active d'un point de vue catalytique et sont munis chacun d'un premier bord (25a, 26a) et d'un second bord (25b, 26b) opposé au précédent, en ce que les revêtements (32, 34) recouvrent entièrement les deux surfaces des noyaux (31, 33), en ce qu'une première paroi (22a, 92a) et une seconde paroi (22b, 92b) sont mises en place pour le ou chaque paquet (24, 94), en ce que les éléments en tôle (25, 26) destinés à former le ou un paquet (24, 94) et présentant les revêtements (32, 34) sont disposés entre les deux parois (22a, 92a), en ce que les premiers bords (25a, 26a) sont tournés vers une surface interne essentiellement plane et lisse de la première paroi (22a, 92a) et les seconds bords (25b, 26b) sont tournés vers une surface interne essentiellement plane et lisse de la seconde paroi (22b, 92b), et en ce qu'au niveau d'au moins une partie périphérique de chacun de leurs deux bords cités (25a, 25b, 26a, 26b), les éléments en tôle (25, 26) précédemment munis de revêtements (32, 34) sont reliés fixement aux deux parois (22a, 22b, 92a, 92b) en faisant fondre de la matière métallique qui contient de la matière dont sont constituées les parois (22a, 22b, 92a, 92b).

2. Procédé selon la revendication 1, caractérisé en ce que les éléments en tôle (25, 26) sont dimensionnés et disposés entre les deux parois (22a, 22b, 92a, 92b) de telle manière que leurs bords cités (25a, 25b, 26a, 26b) soient tournés vers les parois (22a, 22b, 92a, 92b) au moins pour l'essentiel sur toute leur longueur.

3. Procédé selon la revendication 1 ou 2, caractérisé en ce que les surfaces internes des parois (22a, 22b, 92a, 92b) sont disposées parallèlement entre elles et en ce que tous les éléments en tôle (25, 26) servant à former le même paquet (24, 94) sont fabriqués de telle manière que leurs bords cités (25a, 25b, 26a, 26b) vus du dessus soient totalement rectilignes et parallèles entre eux, et que la dimension b des éléments en tôle (25, 26) vus du dessus, qui est mesurée entre les deux bords cités (25a, 25b, 26a, 26b), soit identique chez tous les éléments en tôle (25, 26) appartenant à un même paquet (24, 94).

4. Procédé selon l'une des revendications 1 à 3, caractérisé en ce que l'unique paquet (24, 94) au moins est formé d'éléments en tôle plans (25) et d'éléments en tôle (26) présentant des ondulations (26e) superposés alternativement, et ce, de telle manière que les ondulations (26e) s'étendent parallèlement aux bords cités (25a, 25b, 26a, 26b), ainsi qu'aux parois (22a, 22b, 92a, 92b) et que les éléments en tôle (25, 26) successifs se touchent au niveau des sommets des ondulations (26e), sachant que la hauteur h mesurée entre deux sommets d'ondulations s'élève de préférence tout au plus à 1 mm et que, dans une coupe transversale perpendiculaire aux ondulations (26e), il y a de préférence au moins 150 passages (29) par cm².

5. Procédé selon la revendication 4, caractérisé en ce que les éléments en tôle (26) présentant des ondulations (26e) sont munis partout d'ondulations (26e) et en ce que chaque élément en tôle (25, 26) est fabriqué de telle manière que les revêtements (32, 34) s'étendent jusqu'aux bords (25a, 25b, 26a, 26b) reliés ultérieurement aux parois (22a, 22b, 92a, 92b)

6. Procédé selon l'une des revendications 1 à 5, caractérisé en ce qu'au moins un support (35, 36) métallique servant à former plusieurs éléments en tôle (25, 26) est formé avec deux surfaces opposées l'une à l'autre, en ce que celles-ci sont munies de revêtements (32, 34) ininterrompus, et en ce qu'après l'application des revêtements (32, 34), le support (35, 36) est découpé en morceaux quadrangulaires dont chacun forme un élément en tôle (25, 26).

7. Procédé selon l'une des revendications 1 à 6, caractérisé en ce que, lorsqu'au moins deux parties périphériques sont espacées l'une de l'autre, chaque bord cité (25a, 26a) de chaque élément en tôle (25, 26) est relié fixement à la paroi (22a, 92a) appliquée contre le bord concerné (25a, 26a) en faisant fondre de la matière métallique.

8. Procédé selon l'une des revendications 1 à 7, caractérisé en ce que la chaleur nécessaire pour relier les parois (22a, 22b, 92a, 92b) aux éléments en tôle (25, 26) est apportée par un arc électrique (43) ou une flamme sur le côté des parois (22a, 22b, 92a, 92b) qui est opposé aux éléments en tôle (25, 26).

9. Procédé selon l'une des revendications 1 à 8, caractérisé en ce que les parois (22a, 22b, 92a, 92b) sont reliées aux éléments en tôle (25, 26) par soudage.

10. Procédé selon l'une des revendications 1 à 9, caractérisé en ce que les parois (22a, 22b, 92a, 92b) sont reliées aux éléments en tôle (25, 26) de telle manière que, lors de l'assemblage, de la matière fondue de la paroi et/ou de la matière d'apport fondue pénètre dans des zones situées entre des éléments en tôle (25, 26) adjacents.

11. Procédé selon la revendication 10, caractérisé en ce que les revêtements (32, 34) ont été formés de telle manière qu'ils présentent une matière non métallique, au moins un métal rare et des pores, et en ce que les parois (22a, 22b, 92a, 92b) sont assemblées avec les éléments en tôle (25, 26) de telle manière que, lors de l'assemblage, de la matière fondue de la paroi et/ou de la matière d'apport fondue pénètre dans des pores des revêtements (32, 34).

12. Procédé selon l'une des revendications 1 à 11, caractérisé en ce que les deux parois (22a, 22b, 92a, 92b) associées au même paquet (24, 94) sont constituées par des segments d'une enveloppe (22, 92) essentiellement quadrangulaire qui, en coupe transversale, entoure le paquet (24, 94).

13. Procédé selon l'une des revendications 1 à 12, caractérisé en ce qu'au moins deux blocs (21, 71, 91) sont constitués, dont chacun comporte deux parois (22a, 22b, 92a, 92b) et un paquet (24, 94) d'éléments en tôle (25, 26) disposés entre ces parois (22a, 22b, 92a, 92b) et reliés à elles de la façon citée, et en ce qu'au moins deux de ces blocs (21, 71, 91) sont reliés fixement entre eux.

14. Procédé selon la revendication 13, caractérisé en ce que les blocs (21, 71, 91) sont disposés de telle façon pour assembler qu'au moins une paroi (22a, 22b, 92a, 92b) de chaque bloc (21, 71, 91) se trouve appliquée contre une paroi (22a, 22b, 92a, 92b) d'un autre bloc (21, 71, 91), et en ce que les parois (22a, 22b, 92a, 92b) appliquées l'une contre l'autre sont soudées l'une à l'autre.

15. Procédé selon l'une des revendications 1 à 14, caractérisé en ce que chaque élément en tôle (25, 26) est fabriqué de manière à ce que, vu du dessus, il ait une dimension b mesurée entre les deux bords cités (25a, 25b, 26a, 26b) qui s'élève tout au plus à 50 mm.

16. Procédé selon l'une des revendications 1 à 15, caractérisé en ce que les parois (22a, 22b, 92a, 92b) sont réalisées de manière à ce que les surfaces internes essentiellement planes et lisses des première et seconde parois (22a, 22b, 92a, 92b) s'étendent en continu sur les premiers et seconds bords (25a, 25b, 26a, 26b) de tous les éléments en tôle (25, 26) appartenant au ou au même paquet (24, 94).

17. Procédé selon l'une des revendications 1 à 16, caractérisé en ce que, pour assembler les éléments en tôle (25, 26) avec les parois (22a, 22b, 92a, 92b), on apporte et on fait fondre une matière d'apport, la matière d'apport étant de préférence apportée sur les faces des parois (22a, 22b, 92a, 92b) qui sont opposées aux éléments en tôle (25, 26).

18. Corps de catalyseur pour le traitement catalytique de gaz, notamment pour la purification catalytique de gaz d'échappement de moteurs à combustion interne, comprenant au moins un paquet (24, 94) d'éléments en tôle superposés (25, 26) qui délimitent ensemble des passages (29) pour le gaz et dont chaque paquet présente un noyau métallique (31, 33) présentant deux surfaces opposées, des revêtements (32, 34) contenant une matière active d'un point de vue catalytique, un premier bord (25a, 26a) et un second bord (25b, 26b) opposé au précédent, caractérisé en ce que les revêtements (32, 34) recouvrent entièrement les deux surfaces des noyaux (31, 33), en ce que le ou chaque paquet (24, 94) dispose d'une première paroi (22a, 92a) et d'une seconde paroi (22b, 92b), en ce que les premiers bords (25a, 26a) de chaque élément en tôle (25, 26) du ou d'un paquet (24, 94) sont tournés vers une surface interne essentiellement plane et lisse de la première paroi (22a, 92a) associée au paquet (24, 94), en ce que les seconds bords (25b, 26b) des éléments en tôle (25, 26) du ou d'un paquet (24, 94) sont tournés vers une surface interne essentiellement plane et lisse de la seconde paroi (22b, 92b) associée au paquet (24, 94), et en ce qu' au niveau d'au moins une partie périphérique de chacun de leurs deux bords cités (25a, 25b, 26a, 26b), les éléments en tôle (25, 26) sont reliés fixement aux deux parois (22a, 22b, 92a, 92b) par un assemblage réalisé après application des revêtements, (32, 34) en faisant fondre de la matière métallique, la matière métallique renfermant de la matière dont sont constituées les parois (22a, 22b, 92a, 92b).

19. Corps de catalyseur selon la revendication 18, caractérisé en ce que chaque élément en tôle (25, 26) présente, vu du dessus, une dimension b mesurée entre les deux bords cités (25a, 25b, 26a, 26b) qui s'élève tout au plus à 50 mm.

20. Catalyseur comportant au moins deux corps de catalyseur (12, 62, 82) selon la revendication 18 ou 19, caractérisé en ce qu'il présente un carter (3, 53) avec une paroi (4, 54), une entrée (8, 58) et une sortie (9, 59), en ce que le corps de catalyseur est placé dans le carter (3, 53), en ce que l'entrée (8, 58) communique avec une cavité intérieure (16) présente entre les corps de catalyseur (12, 62, 82), en ce qu'entre la paroi (4, 54) et les corps de catalyseur (12, 62, 82) se trouve une cavité extérieure (17) communiquant avec la sortie (9, 59), et en ce que les passages (29) des corps de catalyseur (12, 62, 82) s'étendent de la cavité intérieure (16) à la cavité extérieure (17).
